# FASCICULE DE BREVET EUROPEEN

(11) **EP 1 292 440 B1**
(45) Date de publication et mention de la délivrance du brevet: **24.08.2005**
(21) Numéro de dépôt: 01947551.6
(22) Date de dépôt: 20.06.2001
(51) Int. Cl.: B29C 45/14

(54) **PROCEDE DE REVETEMENT ET PIECE CORRESPONDANTE**
VERFAHREN ZUR BESCHICHTUNG UND ENTSPRECHENDER GEGENSTAND
COATING METHOD AND CORRESPONDING PART

(30) Priorité: 21.06.2000 FR 0007949
(43) Date de publication de la demande: 19.03.2003
(73) Titulaire: Faurecia Industries, 92100 Boulogne-Billancourt (FR)
(72) Inventeur: SAINT-DIZIER, Serge, F-25700 Valentigney (FR)
(74) Mandataire: Jacobson, Claude
(86) Numéro de dépôt international: PCT/FR2001/001937
(87) Numéro de publication internationale: WO 2001/098051

(56) Documents cités:
- EP-A- 0 186 015
- EP-A- 0 482 270
- WO-A-98/31524
- DE-C- 833 118
- PATENT ABSTRACTS OF JAPAN vol. 17, no. 565 (M-1495), 13 octobre 1993 (1993-10-13) -& JP 05 162169 A (KASAI KOGYO CO LTD), 29 juin 1993 (1993-06-29)
- PATENT ABSTRACTS OF JAPAN vol. 1997, no. 10, 31 octobre 1997 (1997-10-31) -& JP 09 150432 A (DAINIPPON PRINTING CO LTD), 10 juin 1997 (1997-06-10)

## Description

La présente invention concerne un procédé de fabrication d'une pièce revêtue notamment pour un véhicule automobile, selon la préambule de la revendication 1.

L'invention s'applique notamment aux panneaux intérieurs de véhicules automobiles.

On connaît dans l'état de la technique des panneaux intérieurs de portes de véhicule automobile qui sont fabriqués en matière plastique. Une grande partie de la surface apparente à l'état monté du panneau est revêtue d'un revêtement principal, par exemple d'une feuille en matière plastique. Ces feuilles sont généralement bon marché, mais présentent des inconvénients du point de vue optique ou ergonomique. Par exemple, ils sont désagréables à toucher. C'est pourquoi, ces feuilles ne sont pas utilisées pour la zone d'accoudoirs des panneaux intérieurs. En conséquence, on prévoit un second revêtement dans la zone d'accoudoir, revêtement qui est fabriqué en un autre matériau, par exemple en tissu. Ces matériaux sont habituellement plus chers que des feuilles en matière plastique.

Les panneaux intérieurs sont fabriqués dans l'état de la technique de la façon suivante.

La zone du second revêtement est réalisée séparément, soit par surmoulage, soit par affichage du second revêtement sur une pièce de structure injectée, et est assemblée ensuite sur le panneau intérieur. Dans ce cas, le second revêtement est maintenu par un cadre de serrage pendant le surmoulage ou pendant l'affichage, afin d'éviter la formation des plis.

Dans le cas d'utilisation d'un second revêtement en un matériau thermoformable, le second revêtement est préalablement thermoformé, découpé et encollé. Ensuite il est surmoulé en même temps que le revêtement principal du panneau intérieur de porte. Là aussi, le second revêtement doit être serré par un cadre de serrage pendant l'opération de thermoformage.

Ces deux solutions précédemment mentionnées nécessitent un bord de serrage des flans de revêtement pour assurer le maintien dans le cadre de serrage. En conséquence, ces solutions utilisent une surface de revêtement supplémentaire, et menant à un coût de fabrication élevé.

Des procédés de fabrication de pièces revêtues sont connus par les documents WO 98/31524 et EP-A- 482 270.

L'invention a pour but de pallier ces inconvénients et de proposer un panneau intérieur de porte revêtu qui comporte une zone munie d'un second revêtement qui ait un coût de fabrication diminué.

A cet effet, l'invention a pour objet un procédé du type précité, caractérisé en ce qu'il comprend les étapes de la partie caractérisante de la revendication 1.

Selon des modes de réalisation particuliers, le procédé selon l'invention peut comporter une ou plusieurs des caractéristiques suivant les revendications dépendantes 2 à 13.

L'invention a également pour objet une pièce revêtue fabriquée selon l'un des procédés précités, caractérisée en ce qu'elle comprend les caractéristiques de la revendication 14.

La pièce revêtue selon l'invention peut comporter une ou plusieurs des caractéristiques suivant les revendications 15 à 18.

L'invention sera mieux comprise à la lecture de la description qui va suivre, donné uniquement à titre d'exemple et faite en se référant aux dessins annexés sur lesquels :
- la Figure 1 est une vue schématique de côté d'un premier mode de réalisation d'un panneau intérieur de porte selon l'invention ;
- la Figure 2 est une vue de plan d'un ensemble de deux flans de revêtement selon l'invention ;
- la Figure 3 est une vue schématique en coupe d'une presse pour la fabrication de l'ensemble de la Figure 2 ;
- la Figure 4 est une vue de dessous du poinçon de la presse de la Figure 3 ;
- la Figure 5 est une vue schématique en coupe d'un moule d'injection pour la fabrication du panneau de la Figure 1 à l'état ouvert ;
- la Figure 6 est le moule de la Figure 5 à l'état fermé ;
- la Figure 7 est une vue schématique de côté d'un deuxième mode de réalisation d'un panneau intérieur de porte selon l'invention ;
- la Figure 8 est une vue de plan d'un ensemble de deux flans de revêtement pour le panneau de la figure 7 ;
- la Figure 9 est une vue schématique en coupe d'une presse pour la fabrication d'un ensemble de la Figure 8 ;
- la Figure 10 est une vue schématique en coupe d'un moule d'injection pour la fabrication du panneau de la Figure 7 à l'état ouvert ;
- la Figure 11 est le moule de la Figure 10 à l'état fermé ; et
- les Figures 12A à 12C sont des vues de côtés en coupe de différents modes de réalisation d'accoudoirs.

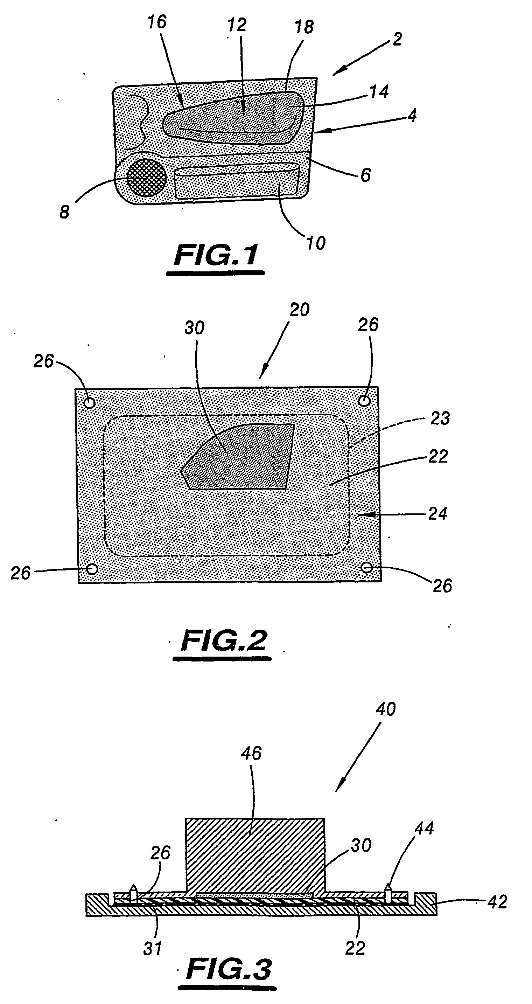

Sur la Figure 1, on a représenté un panneau intérieur de porte pour véhicule automobile désigné par la référence générale 2.

Le panneau intérieur 2 est fabriqué à partir d'une pièce en matière plastique injectée 4.

Cette pièce est revêtue sur toute sa surface apparente à l'état monté, c'est-à-dire sa surface intérieure, d'un revêtement principal 6. Ce revêtement principal 6 est par exemple une feuille en matière plastique (PVC par exemple) ou en cuir bon marché.

Le panneau de porte 2 comporte des évidements pour des composants, par exemple pour une enceinte acoustique 8, et des emplacements pour un vide-poche 10. Il comporte en outre une zone bombée 12 formant accoudoir.

La zone d'accoudoir 12 est revêtue d'un revêtement secondaire 14 d'un matériau sélectionné comme par exemple un tissu. Le revêtement secondaire 14 est solidarisé avec le revêtement principal 6.

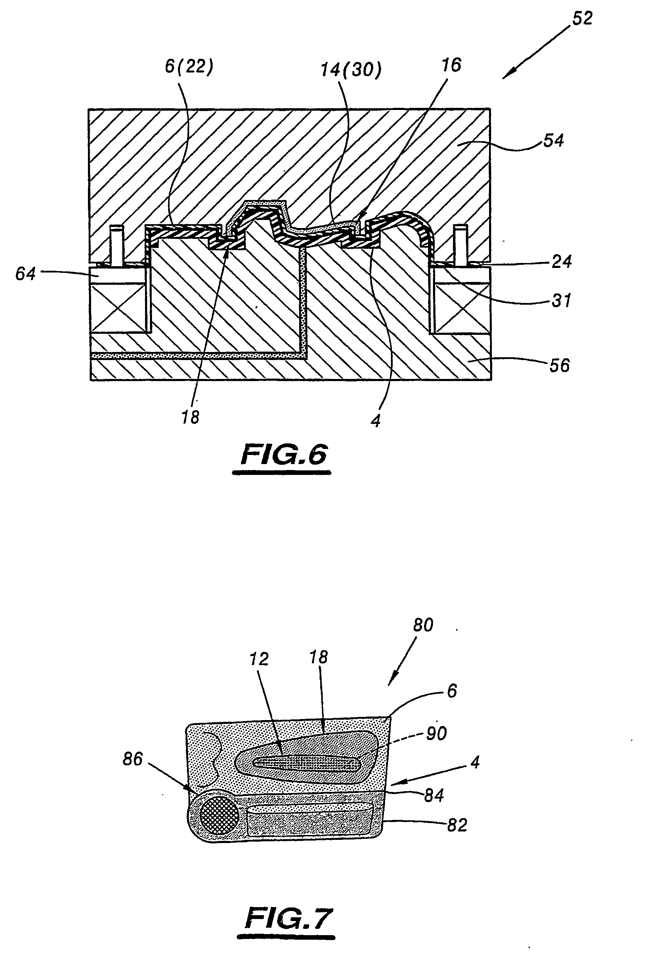

En l'occurrence, le revêtement secondaire 14 est collé directement sur le revêtement principal 6. Le bord 16 du revêtement secondaire est dissimulé dans une gorge 18 ménagée dans la pièce injectée (voir Figure 6 ci-après).

En se référant aux Figures 2 à 6, on va décrire le procédé de fabrication de ce panneau plus en détail.

Sur la Figure 2, on voit un ensemble 20 de deux flans de revêtement pour le panneau de porte 2.

L'ensemble comporte un flan 22 de revêtement principal 6 en forme rectangulaire. En variante, le flan peut présenter une forme trapézoïdale. Le flan 22 présente une zone 23 correspondant à la surface revêtue du panneau de porte 2. On voit que le flan principal 22 a une surface plus grande que la surface revêtue 23 du panneau de porte 2 et comprend un bord de serrage 24 pour le maintien du flan principal 22 dans un moule. Le flan principal 22 comporte en outre sur son bord de serrage 24 quatre trous de positionnement 26.

L'ensemble de flans 20 comporte en outre un flan secondaire 30. Ce flan secondaire 30 a une forme correspondant à la forme de la zone d'accoudoir 12 du panneau de porte 2 après la mise en forme lors de la fermeture du moule d'injection (voir ci-après).

Le flan secondaire 30 est collé sur le flan principal 22. La colle utilisée est un adhésif pour collage par adhérence à température ambiante. Il est posé sur les deux,surfaces des flans devant être assemblés.

Une feuille 31 de protection thermique des deux flans 22, 30 peut être collée sur la surface du flan principal 22 opposée au flan secondaire 30. Cette feuille 31 protège les deux flans 22, 30 des dégradations thermiques.

Il est à noter que lorsque les flans 22, 30 présentent des propriétés d'étirement différentes en fonction de la direction, le flan concerné est orienté de la façon appropriée à la forme à réaliser.

Sur la Figure 3, on a représenté une presse pour assembler les deux flans.

La presse 40 comporte une matrice 42 sensiblement plate ayant un évidement correspondant au flan principal 22. Elle comporte quatre ergots de positionnement 44 qui coopèrent avec les trous de positionnement 26 du flan principal 22.

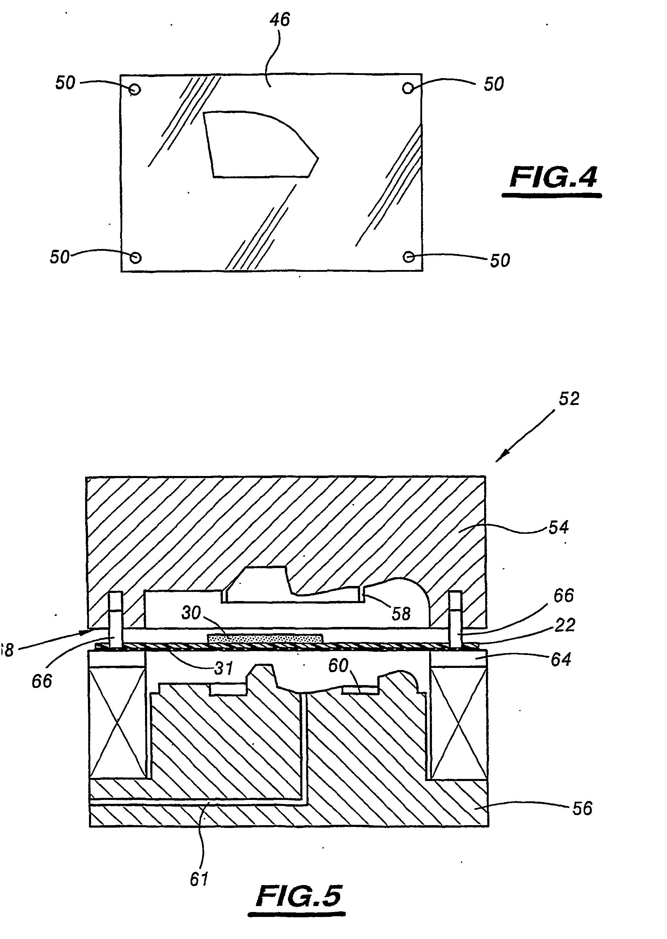

La presse 40 comporte en outre un poinçon 46 sensiblement plat ayant un évidement 48 correspondant à la forme du flan secondaire 30 (voir Figure 4). Pour le positionnement relatif du poinçon 46 par rapport à la matrice 42, celui-ci comporte également des trous de positionnement 50 qui coopèrent avec les ergots de positionnement 44 de la matrice 42 (Figure 3).

En se référant aux Figures 5 et 6, on voit un moule d'injection 52 pour la fabrication du panneau de porte 2 de la Figure 1. Le moule d'injection 52 comprend un demi-moule supérieur 54 de forme générale concave ainsi qu'un demi-moule inférieur 56 de forme générale convexe. Le demi-moule supérieur 54 comporte une nervure 58 entourant la partie de l'accoudoir du moule. Cette nervure 58 coopère avec une gorge 60 ménagée dans le demi-moule inférieur 56. La nervure et la gorge forment dans la pièce injectée 4 la gorge 18 dissimulant le bord 16 du flan secondaire. Un canal d'injection 61 est ménagé dans le demi-moule inférieur 56 et débouche au milieu de la surface de moulage de celle-ci.

Le moule 52 comporte en outre un cadre de serrage 64 qui entoure complètement le demi-moule inférieur 56 convexe. Ce cadre de serrage 64 est mobile verticalement par rapport au demi-moule inférieur 56 et, au départ, se trouve au-dessus de celui-ci.

Le cadre de serrage 64 comporte des tiges de positionnement 66 qui font saillie vers le haut et qui sont disposées de la même façon que les ergots 44 de la matrice 42 de la presse d'assemblage 40. Les tiges 66 coopèrent avec des trous correspondants ménagés dans le demi-moule supérieur 54. L'ensemble flan principal 22/flan secondaire 30 est positionné par le cadre de serrage 64 par l'intermédiaire des trous de positionnement 26 du flan principal 22 et est serré entre le cadre 64 et une surface périphérique inférieure 68 du demi-moule supérieur 54.

Le flan principal 22 joue alors le rôle de bord de serrage pour le flan secondaire 30.

Sur la Figure 6, on voit le moule 52 à l'état fermé. De la matière plastique est injectée dans le moule sur le côté du flan principal 22 opposé au flan secondaire 30, par le canal d'injection 61.

Le panneau de porte est fabriqué de la façon suivante.

Tout d'abord, on découpe le flan principal 22 du revêtement principal suivant une forme rectangulaire. Puis on découpe le flan 30 du revêtement secondaire selon la forme correspondant à la forme de la seconde zone du panneau de porte. Ensuite, on place le flan principal 22 dans la matrice de la presse 40, et on place le flan secondaire 30 dans l'évidement correspondant 30 du poinçon 46.

On applique de la colle sur les surfaces des deux flans 22, 30 devant être collées.

Puis on presse les deux flans 22, 30 l'un contre l'autre, on retire le poinçon 46, et on sort l'ensemble des deux flans 22, 30 de la matrice.

On place l'ensemble des deux flans 22, 30 sur le cadre de serrage 64 du moule ouvert, le flan secondaire 30 dirigée vers le haut. Le positionnement exact est obtenu par les tiges de positionnement 66 du cadre de serrage et les trous de positionnement 26 du flan principal correspondants. On ferme le moule. Lors de la fermeture du moule 52, les deux flans 22, 30 sont étirés simultanément partiellement selon la forme tri-dimensionnelle du moule sans apparition de plis. Ils prennent alors à peu près la forme finale des revêtements 6, 14. Pendant cette étape, le cadre 64 s'escamote vers le bas dans le demi-moule inférieur 56.

On injecte de la matière plastique dans le moule sur la surface inférieure de la feuille 31, c'est-à-dire le côté du flan principal 22 opposé du flan secondaire 30. La pression d'injection met les revêtements 6, 14 en leur forme finale.

Ensuite, on laisse durcir la matière plastique, on ouvre le moule 52 et l'on retire l'ébauche du panneau de porte.

On finit le panneau intérieur 2 de porte par découpage du bord de serrage 24 excédentaire du revêtement principal 6.

Il est à noter que les tiges de positionnement (44, 64) des différents dispositifs sont alignées selon un système référentiel commun à toutes les étapes du procédé. Ainsi, l'alignement des pièces les unes par rapport aux autres est garanti.

Il est à noter que le revêtement principal 6 protège le revêtement secondaire des dégradations pendant l'injection dues à la température et la pression de la matière plastique.

Le fait que la matière plastique ne traverse pas le revêtement principal 6 mène à une conservation de la structure de surface, par exemple du velours, du revêtement secondaire 14, de sorte qu'il n'est pas nécessaire d'utiliser des moyens supplémentaires de protection de ce revêtement secondaire.

Sur les Figures 7 à 12C, on a représenté un second mode de réalisation de l'invention. Dans ce qui suit, on va décrire les différences par rapport au premier mode de réalisation décrit ci-dessus.

La Figure 7 montre un deuxième mode de réalisation d'un panneau intérieur de porte 80 selon l'invention.

Comme différence par rapport au panneau du premier mode de réalisation, la surface apparente du panneau 80 à l'état monté n'est revêtue que partiellement du revêtement principal 6.

Ce panneau de porte 80 comporte donc une partie 82 non revêtue de matière plastique injectée 4 apparente.

La zone de transition 84 entre les parties revêtue et non revêtue 82 est dissimulée par une gorge 86 ménagée dans le panneau, analogue à la gorge de dissimulation 18 du bord du revêtement secondaire 14.

De plus, le panneau 80 comporte une plaque 90 en mousse de matière plastique dans la zone 12 convexe formant accoudoir. Cette plaque 90 est prise en sandwich entre le revêtement principal 6 et le revêtement secondaire 14 . Elle est complètement entourée par une région marginale du revêtement secondaire 14. Dans la région marginale, le revêtement secondaire 14 est solidarisé directement sur le revêtement principal 6. En variante, la plaque peut être entourée sur une grande partie de son pourtour par la région marginale 14.

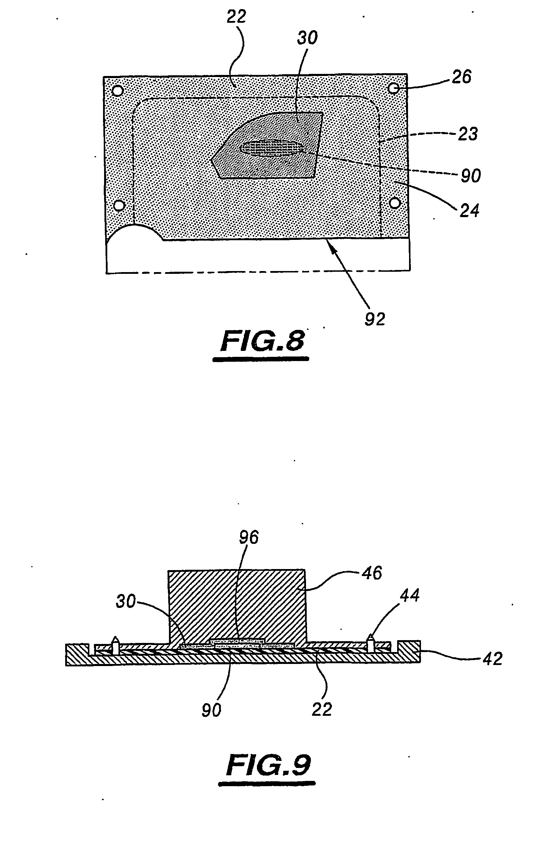

La Figure 8 montre l'ensemble de deux flans avec la plaque 90 en mousse incorporée.

On voit que le flan principal 22 a une forme sensiblement rectangulaire, les trois côtés du bord de serrage 24 qui correspondent aux côtés du panneau 80 revêtus jusqu'au bord de ce panneau étant identiques à ceux de l'ensemble 20 de la Figure 2.

Le côté libre 92 correspondant à la zone de transition 84 est coupé en forme selon le tracé de cette zone 84.

Sur la Figure 9, on voit qu'un évidement 96 supplémentaire est prévu dans le poinçon 46, évidement 96 qui correspond à la forme de la plaque 90 en mousse.

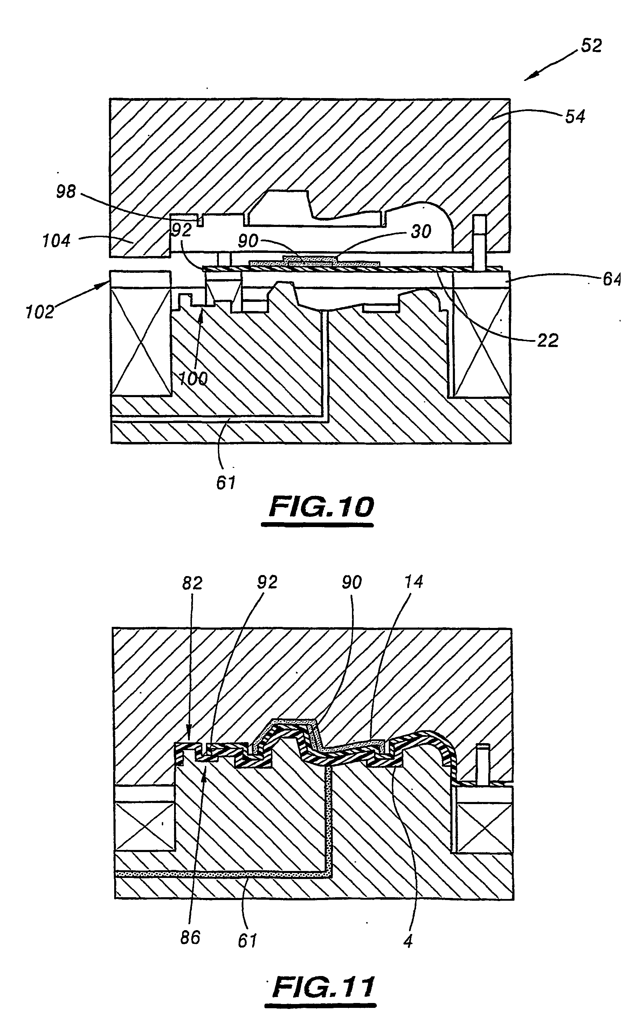

Le moule 52 représenté sur les Figures 10 et 11 comprend une nervure 98 et une gorge 100 supplémentaires pour former la zone de transition 84 du panneau.

Le cadre de serrage 64 du moule 52 est modifié de façon à tenir compte de la position déplacée des trous de positionnement 26. Le cadre de serrage 64 du moule ne maintient le flan principal 22 que sur les trois côtés du bord de serrage 24, le côté libre n'étant pas maintenu. Le côté 102 du cadre de serrage 64 et le côté 104 du demi-moule supérieur 54 qui correspondent au côté libre du panneau ont des profils complémentaires afin de fermer le moule de façon étanche à la matière plastique liquide pendant l'injection.

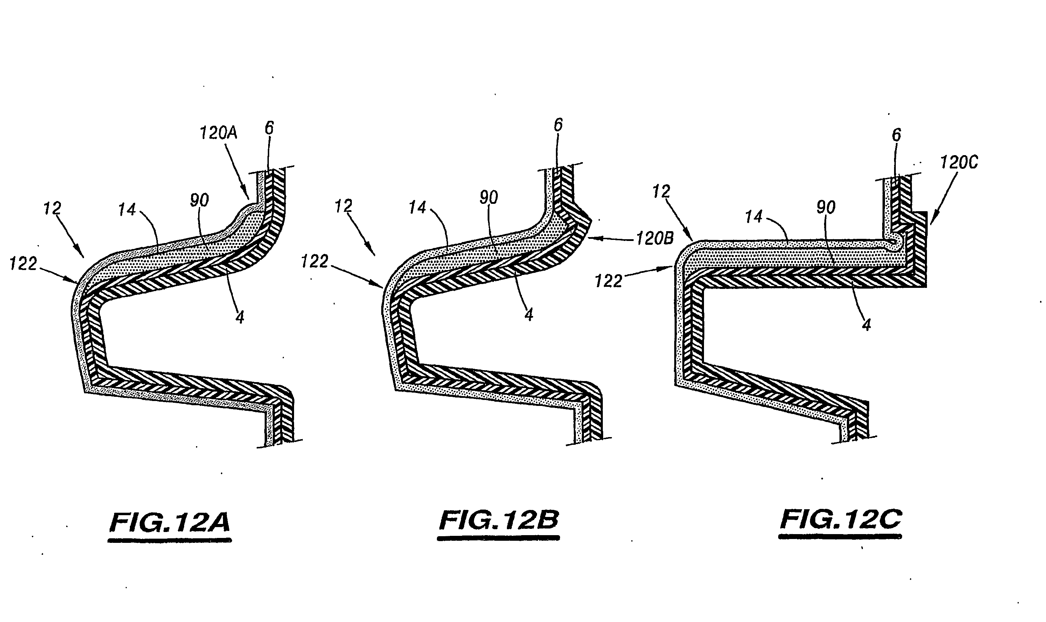

Sur les Figures 12A à 12C, on a représenté différentes formes d'accoudoirs 12 qui peuvent être fabriqués par le procédé selon l'invention.

Sur la Figure 12A, la forme du bord supérieur de la plaque 90 en mousse de matière plastique est apparente et constitue un bourrelet 120A, tandis que la paroi de la pièce en matière plastique 4 du panneau de porte 80 a une courbure continue dans cette zone.

Sur la Figure 12B, le bord supérieur de la plaque 90 en mousse de matière plastique rendu invisible par le fait qu'il est reçu dans un évidement 120B ménagé dans la paroi du panneau de porte 80. Par suite, la tension exercée par la plaque 90 sur le revêtement secondaire 14 est diminuée par rapport à la forme de la Figure 12A.

Le bord supérieur de la plaque 90 en mousse peut être complètement dissimulé dans un creux 120C du panneau, comme le montre la Figure 12C.

Sur son bord opposé, la plaque 90 en mousse est arrêtée, dans les trois modes de réalisation, à l'emplacement d'un bord convexe 122 de l'accoudoir (côté gauche sur les Figures 12A à 12C). Le gonflement de la mousse après le démoulage est progressif grâce à la tension du tissu du revêtement secondaire 14.

On constate que le procédé selon l'invention permet de fabriquer un panneau de porte comportant des zones revêtues de différents revêtements, sans la nécessité de bords de serrage pour des revêtements secondaires ni pour la plaque en mousse de matière plastique.

Ainsi, on économise du matériau de fabrication. De plus, étant donné que le panneau de porte est fabriqué en surmoulant tous les revêtements en une seule étape, la fabrication s'effectue plus rapidement.

Par ailleurs, les investissements spécifiques dans les machines utilisées pour la mise en forme du revêtement secondaire peuvent être économisés.

En variante la plaque en mousse de matière plastique peut être solidarisée avec le flan principal et/ou le flan secondaire par d'autres moyens que par collage, par exemple par soudage.

De façon générale, les revêtements, la plaque en mousse de matière plastique et la feuille de protection thermique peuvent être solidarisés les uns aux autres par tout moyen approprié.

Il est à noter que différentes techniques de surmoulage peuvent être utilisées pour la fabrication du panneau de porte selon l'invention, par exemple surmoulage par injection-compression, par extrusion-compression ou par thermocompression.

## Revendications

1. Procédé de fabrication d'une pièce revêtue (2) notamment pour un véhicule automobile, du type comprenant une structure en matériau plastique injecté (4) revêtue dans au moins une première zone de la surface d'un revêtement principal (6) et dans au moins une seconde zone de la surface d'un revêtement secondaire (14), ladite seconde zone de surface étant entourée sur au moins une partie de son pourtour par ladite première zone, **caractérisé en ce qu'**il comprend les étapes suivantes :
- on découpe un flan principal (22) du revêtement principal (6) de taille supérieure à la surface de ladite première zone en laissant un bord de serrage (24),
- on découpe un flan secondaire (30) du revêtement secondaire (14) de taille et forme correspondant sensiblement à ladite seconde zone,
- on solidarise le flan secondaire (30) avec le flan principal (22) sur une surface destinée à rester apparente de ce flan principal (22), à l'emplacement correspondant à ladite seconde zone,
- on place l'ensemble flan principal (22)/flan secondaire (30) dans un moule (52) sur un cadre de serrage (64), lequel positionne le bord de serrage (24) du flan principal (22),
- on ferme le moule (52), l'ensemble flan principal (22)/flan secondaire (30) étant au moins partiellement mis en forme selon la forme du moule (52) lors de la fermeture,
- on surmoule l'ensemble flan principal (22)/flan secondaire (30) du côté du flan principal (22) opposé au flan secondaire (30) avec de la matière plastique (4),
- on laisse durcir la matière plastique (4), et on démoule l'ensemble de structure, et
- on découpe le bord de serrage (24) du flan principal (22).

2. Procédé selon la revendication 1, **caractérisé en ce qu'**on solidarise le flan secondaire (30) avec le flan principal par collage.

3. Procédé selon la revendication 1 ou 2, **caractérisé en ce qu'**on étire, au moins partiellement, le flan principal (22) et le flan secondaire (30) simultanément lors de la fermeture du moule (52).

4. Procédé selon l'une quelconque des revendications 1 à 3, **caractérisé en ce qu'**il comprend en outre les étapes suivantes :
- on positionne une plaque (90) en mousse de matière plastique sur le flan principal (22) dans une zone comprise à l'intérieur de ladite seconde zone,
- on solidarise le flan secondaire (30) avec la surface apparente du flan principal (22), en recouvrant au moins partiellement, de préférence complètement, la plaque (90) en mousse.

5. Procédé selon la revendication 4, **caractérisé en ce qu'**on solidarise la plaque (90) en mousse avec le flan principal (22).

6. Procédé selon la revendication 5, **caractérisé en ce qu'**on solidarise la plaque (90) en mousse avec le flan principal par collage.

7. Procédé selon l'une quelconque des revendications 4 à 6, **caractérisé en ce que** la plaque en mousse (90) est prise en sandwich entre le flan principal (22) et le flan secondaire (30), et **en ce que** la plaque (90) est au moins partiellement, de préférence complètement, entourée par une région marginale du flan secondaire (22).

8. Procédé selon l'une quelconque des revendications précédentes, **caractérisé en ce que** le flan principal (22) est maintenu sur tout son pourtour dans le cadre de serrage (64).

9. Procédé selon l'une quelconque des revendications 1 à 7 de fabrication d'une pièce partiellement revêtue du revêtement principal sur un côté, **caractérisé en ce qu'**on découpe le flan principal (22) dans une forme dont le tracé d'un côté du bord (92) correspond au tracé du bord (84) entre le revêtement principal (6) et la partie non revêtue (82), et **en ce qu'**on prévoit le bord de serrage (24) sur les autres côtés du bord.

10. Procédé selon la revendication 8 ou 9, **caractérisé en ce que** le flan principal (22) a une forme sensiblement rectangulaire.

11. Procédé selon l'une quelconque des revendications précédentes, **caractérisé en ce qu'**il comporte en outre les étapes suivantes :
- on fixe le flan principal (22) dans une matrice (42) dans une position définie,
- on fixe le flan secondaire (30) dans un évidement d'un poinçon (46) destiné à coopérer avec une matrice (42), l'évidement ayant une forme complémentaire à celle du flan secondaire (30) et étant situé à un emplacement correspondant à l'emplacement du flan secondaire (30) sur le flan principal (22),
- on applique le poinçon (46) sur la matrice (42), et
- on retire le poinçon (46) et l'on retire l'ensemble flan principal (22)/flan secondaire (30) de la matrice (42).

12. Procédé selon l'une quelconque des revendications précédentes, **caractérisé en ce qu'**on utilise un système référentiel commun pour toutes les opérations de positionnement des pièces les unes par rapport aux autres.

13. Procédé selon l'une quelconque des revendications précédentes, **caractérisé en ce qu'**on solidarise, notamment par collage, une feuille (31) de protection thermique du flan principal (22) et du flan secondaire (30) sur la surface du flan principal (22) opposée au flan secondaire (30).

14. Pièce revêtue, du type comprenant un revêtement principal (6) et un revêtement secondaire (14) ainsi qu'une gorge (18) ménagée dans la surface revêtue, le pourtour de la gorge (18) correspondant sensiblement au pourtour dudit revêtement secondaire (14) et recevant le bord (16) dudit revêtement secondaire en le dissimulant, la pièce comportant en outre une plaque (90) en mousse de matière plastique serrée entre le revêtement principal (6) et le revêtement secondaire(14), **caractérisée en ce que** la pièce est fabriquée par un procédé selon la revendication 7 ou l'une des revendications qui en dépend, et **en ce que** la plaque (90) est au moins partiellement entourée par une région marginale dudit revêtement secondaire.

15. Pièce revêtue selon la revendication 14 fabriquée par un procédé selon la revendication 9 ou l'une des revendications qui en dépend, **caractérisée en ce qu'**elle comporte une gorge (86) ménagée dans la surface revêtue et recevant le bord libre (92) du revêtement principal (22) en le dissimulant.

16. Pièce revêtue selon l'une quelconque des revendications 14 à 15 fabriquée par un procédé selon la revendication 13, **caractérisée en ce qu'**elle comporte une feuille (31) de protection thermique du flan principal (22) et du flan secondaire (30) fixée sur la surface du flan principal (22) opposée au flan secondaire (30).

17. Pièce revêtue selon l'une quelconque des revendications 14 à 16, **caractérisée en ce qu'**elle forme un panneau intérieur (2) de porte de véhicule automobile.

18. Pièce revêtue selon la revendication 17, **caractérisée en ce qu'**elle comporte une zone formant accoudoir (12), et **en ce que** la plaque (90) en mousse de matière plastique se trouve dans la zone formant accoudoir (12).

## Patentansprüche

1. Verfahren zur Herstellung eines beschichteten Teils (2) insbesondere für ein Kraftfahrzeug, der Art mit einer Struktur aus einem gespritzten Plastikmaterial (4), welche in zumindest einem ersten Bereich der Oberfläche mit einer Hauptbeschichtung (6) und in zumindest einem zweiten Bereich der Oberfläche mit einer Sekundärbeschichtung (14) beschichtet ist, wobei der zweite Bereich der Oberfläche über zumindest einen Teil seines äußeren Umfangs von dem ersten Bereich umgeben ist, **dadurch gekennzeichnet, dass** es die folgenden Schritte umfasst:
- ein Hauptzuschnitt (22) der Hauptbeschichtung (6) mit einer größeren Größe als die Oberfläche des ersten Bereiches wird unter Stehenlassen einer Klemmkante (24) ausgeschnitten,
- ein Sekundärzuschnitt (30) der Sekundärbeschichtung (14) in der Größe und Form, die praktisch dem zweiten Bereich entsprechen, wird ausgeschnitten,
- der Sekundärzuschnitt (30) wird mit dem Hauptzuschnitt (22) auf einer Oberfläche, die dafür bestimmt ist, von diesem Hauptzuschnitt (22) sichtbar zu bleiben, an der Stelle einstückig ausgebildet, die dem zweiten Bereich entspricht,
- die Anordnung aus Hauptzuschnitt (22)/Sekundärzuschnitt (30) wird in einer Pressform (52) auf einem Spannrahmen (64) angeordnet, welcher die Klemmkante (24) des Hauptzuschnitts (22) positioniert,
- die Pressform (52) wird geschlossen, wobei die Anordnung aus Hauptzuschnitt (22)/Sekundärzuschnitt (30) zumindest teilweise gemäß der Form der Pressform (52) während des Schließens in Form gebracht wird,
- die Anordnung aus Hauptzuschnitt (22)/Sekundärzuschnitt (30) wird auf der Seite des Hauptzuschnitts (22), die dem Sekundärzuschnitt (30) gegenüberliegt, mit Plastikmaterial (4) überformt,
- das Plastikmaterial (4) wird dem Aushärten überlassen und die Strukturanordnung wird aus der Pressform genommen, und
- die Klemmkante (24) des Hauptzuschnitts (22) wird ausgeschnitten.

2. Verfahren gemäß Anspruch 1, **dadurch gekennzeichnet, dass** der Sekundärzuschnitt (30) mit dem Hauptzuschnitt durch Verklebung einstückig ausgebildet wird.

3. Verfahren gemäß Anspruch 1 oder 2, **dadurch gekennzeichnet, dass** der Hauptzuschnitt (22) und der Sekundärzuschnitt (30) gleichzeitig während des Schließens der Pressform (52) zumindest teilweise streckgezogen werden.

4. Verfahren gemäß irgendeinem der Ansprüche 1 bis 3, **dadurch gekennzeichnet, dass** es außerdem die folgenden Schritte umfasst:
- eine Platte (90) aus Plastikschaum wird auf dem Hauptzuschnitt (22) in einem Bereich angeordnet, der innerhalb des zweiten Bereiches liegt,
- der Sekundärzuschnitt (30) wird mit der sichtbaren Oberfläche des Hauptzuschnitts (22) einstückig ausgebildet, indem die Platte (90) aus Schaum zumindest teilweise, vorzugsweise vollständig, abgedeckt wird.

5. Verfahren gemäß Anspruch 4, **dadurch gekennzeichnet, dass** die Platte (90) aus Schaum mit dem Hauptzuschnitt einstückig ausgebildet wird.

6. Verfahren gemäß Anspruch 5, **dadurch gekennzeichnet, dass** die Platte (90) aus Schaum mit dem Hauptzuschnitt durch Verklebung einstückig ausgebildet wird.

7. Verfahren gemäß irgendeinem der Ansprüche 4 bis 6, **dadurch gekennzeichnet, dass** die Platte aus Schaum (90) in Sandwichform zwischen den Hauptzuschnitt (22) und den Sekundärzuschnitt (30) genommen wird, und dass die Platte (90) zumindest teilweise, vorzugsweise vollständig, von einem Randbereich des Sekundärzuschnitts (30) umgeben ist.

8. Verfahren gemäß irgendeinem der vorherigen Ansprüche, **dadurch gekennzeichnet, dass** der Hauptzuschnitt (22) über seinen gesamten äußeren Umfang in dem Spannrahmen (64) gehalten wird.

9. Verfahren gemäß irgendeinem der Ansprüche 1 bis 7 zur Herstellung eines teilweise, auf einer Seite mit der Hauptbeschichtung beschichteten Teiles, **dadurch gekennzeichnet, dass** der Hauptzuschnitt (22) aus einer Form ausgeschnitten wird, deren Verlauf auf einer Seite des Randes (92) dem Verlauf der Kante (84) zwischen der Hauptbeschichtung (6) und dem nicht beschichteten Bereich (82) entspricht, und dass die Klemmkante (24) an den anderen Seiten des Randes vorgesehen wird.

10. Verfahren gemäß Anspruch 8 oder 9, **dadurch gekennzeichnet, dass** der Hauptzuschnitt (22) eine praktisch rechteckige Form aufweist.

11. Verfahren gemäß irgendeinem der vorherigen Ansprüche, **dadurch gekennzeichnet, dass** es außerdem die folgenden Schritte aufweist:
- der Hauptzuschnitt (22) wird in einer Matrize (42) in einer definierten Position befestigt,
- der Sekundärzuschnitt (30) wird in einer Aussparung eines Stanzstempels (46) befestigt, der dafür bestimmt ist, mit einer Matrize (42) zusammenzuwirken, wobei die Aussparung eine komplementäre Form zu derjenigen des Sekundärzuschnitts (30) aufweist und an einer Stelle angeordnet ist, welche der Stelle des Sekundärzuschnitts (30) auf dem Hauptzuschnitt (22) entspricht,
- der Stanzstempel (46) wird auf die Matrize (42) aufgesetzt, und
- der Stanzstempel (46) und die Anordnung aus Hauptzuschnitt (22)/Sekundärzuschnitt (30) werden von der Matrize (42) hochgenommen.

12. Verfahren gemäß irgendeinem der vorherigen Ansprüche, **dadurch gekennzeichnet, dass** ein gemeinsames Referenzsystem für alle Positionierungsvorgänge der Teile zueinander verwendet wird.

13. Verfahren gemäß irgendeinem der vorherigen Ansprüche, **dadurch gekennzeichnet, dass** eine Wärmeschutzfolie (31) für den Hauptzuschnitt (22) und den Sekundärzuschnitt (30) insbesondere durch Verklebung auf der Oberfläche des Hauptzuschnitts (22), welche dem Sekundärzuschnitt (30) gegenüberliegt, einstückig ausgebildet wird.

14. Beschichtetes Teil der Art mit einer Hauptbeschichtung (6) und einer Sekundärbeschichtung (14) sowie einer Auskehlung (18), die in der beschichteten Oberfläche angeordnet ist, wobei der äußere Umfang der Auskehlung (18) praktisch dem äußeren Umfang der Sekundärbeschichtung (14) entspricht und die Kante (16) der Sekundärbeschichtung aufnimmt, wobei er sie verdeckt, wobei das Teil außerdem eine Platte (90) aus Plastikschaum aufweist, die zwischen der Hauptbeschichtung (6) und der Sekundärbeschichtung (14) festgeklemmt ist, **dadurch gekennzeichnet, dass** das Teil durch ein Verfahren gemäß Anspruch 7 oder einem der davon abhängigen Ansprüche hergestellt wird, und dass die Platte (90) zumindest teilweise von einem Randbereich der Sekundärbeschichtung umgeben ist.

15. Beschichtetes Teil gemäß Anspruch 14, das durch ein Verfahren gemäß Anspruch 9 oder einem der davon abhängigen Ansprüche hergestellt ist, **dadurch gekennzeichnet, dass** es eine in der beschichteten Oberfläche ausgeführte Auskehlung (86) aufweist, welche die freie Kante (92) der Hauptbeschichtung (22) aufnimmt, wobei sie sie verdeckt.

16. Beschichtetes Teil gemäß irgendeinem der Ansprüche 14 bis 15, das durch ein Verfahren gemäß Anspruch 13 hergestellt ist, **dadurch gekennzeichnet, dass** es eine Wärmeschutzfolie (31) für den Hauptzuschnitt (22) und den Sekundärzuschnitt (30) aufweist, welche auf der Oberfläche des Hauptzuschnitts (22), die dem Sekundärzuschnitt gegenüberliegt, befestigt ist.

17. Beschichtetes Teil gemäß irgendeinem der Ansprüche 14 bis 16, **dadurch gekennzeichnet, dass** es eine innere Türplatte (2) für ein Kraftfahrzeug bildet.

18. Beschichtetes Teil gemäß Anspruch 17, **dadurch gekennzeichnet, dass** es einen Bereich aufweist, der eine Armlehne (12) bildet, und dass sich die Platte (90) aus Plastikschaum in dem Bereich befindet, der die Armlehne (12) bildet.

## Claims

1. Method for producing a coated part (2), in particular for an automotive vehicle, of the type comprising a. structure made of an injected plastic material (4), which structure is coated in at least one first zone of the surface with a main coating (6) and in at least one second zone of the surface with a secondary coating (14), said second surface zone being surrounded on at least one portion of its circumference by said first zone, **characterised in that** it comprises the following steps:
- a main blank (22) of the main coating (6) is cut, of a size greater than the surface of said first zone, leaving a clamping edge (24),
- a secondary blank (30) of the secondary coating (14) is cut, of a size and shape corresponding substantially to said second zone,
- the secondary blank (30) is made integral with the main blank (22) over a surface, which is intended to remain visible, of this main blank (22), at the position which corresponds to said second zone,
- the main blank (22)/secondary blank (30) assembly is placed in a mould (52) on a vice (64), which positions the clamping edge (24) of the main blank (22),
- the mould (52) is closed, the main blank (22)/secondary blank (30) assembly being at least partially shaped according to the shape of the mould (52) during closure,
- the main blank (22)/secondary blank (30) assembly has plastic material (4) moulded on on the side of the main blank (22) which is opposite the secondary blank (30),
- the plastic material (4) is allowed to harden and the structure assembly is removed from the mould, and
- the clamping edge (24) of the main blank (22) is cut.

2. Method according to claim 1, **characterised in that** the secondary blank (30) is made integral with the main blank by gluing.

3. Method according to claim 1 or 2, **characterised in that** the main blank (22) and the secondary blank (30) are stretched simultaneously, at least partially, during closure of the mould (52).

4. Method according to any of the claims 1 to 3, **characterised in that** it comprises furthermore the following steps:
- a plate (90) made of plastic material foam is positioned on the main blank (22) in a zone situated in the interior of said second zone,
- the secondary blank (30) is made integral with the visible surface of the main blank (22), by covering, at least partially, preferably completely, the foam plate (90).

5. Method according to claim 4, **characterised in that** the foam plate (90) is made integral with the main blank (22).

6. Method according to claim 5, **characterised in that** the foam plate (90) is made integral with the main blank by gluing.

7. Method according to any of the claims 4 to 6, **characterised in that** the foam plate (90) is sandwiched between the main blank (22) and the secondary blank (30), and **in that** the plate (90) is at least partially, preferably completely, surrounded by a marginal region of the secondary blank (22).

8. Method according to any of the preceding claims, **characterised in that** the main blank (22) is retained over its entire circumference in the vice (64).

9. Method according to any of the claims 1 to 7 for producing a part which is partially coated with a main coating on one side, **characterised in that** the main blank (22) is cut into a shape, the plan of which on one side of the edge (92) corresponds to the plan of the edge (84) between the main coating (6) and the non-coated part (82), and **in that** the clamping edge (24) is provided on the other sides of the edge.

10. Method according to claim 8 or 9, **characterised in that** the main blank (22) has a substantially rectangular shape.

11. Method according to any of the preceding claims, **characterised in that** it comprises furthermore the following steps:
- the main blank (22) is fixed in a matrix (42) in a defined position,
- the secondary blank (30) is fixed in a recess of a stamp (46) which is intended to cooperate with a matrix (42), the recess having a shape complementary to that of the secondary blank (30) and being situated at a position which corresponds to the position of the secondary blank (30) on the main blank (22),
- the stamp (46) is applied on the matrix (42), and
- the stamp (46) is removed and the main blank (22) / secondary blank (30) assembly is removed from the matrix (42).

12. Method according to any of the preceding claims, **characterised in that** a common reference system is used for all of the operations of positioning the parts with respect to each other.

13. Method according to any of the preceding claims, **characterised in that** there is made integral, in particular by gluing, a foil (31) for thermal protection of the main blank (22) and of the secondary blank (30) on the surface of the main blank (22) which is opposite the secondary blank (30).

14. Coated part, of the type comprising a main coating (6) and a secondary coating (14) and also a groove (18) which is provided in the coated surface, the circumference of the groove (18) corresponding substantially to the circumference of said secondary coating (14) and receiving the edge (16) of said secondary coating whilst concealing it, the part comprising furthermore a plate (90) made of plastic material foam which is clamped between the main coating (6) and the secondary coating (14), **characterised in that** the part is produced by a method according to claim 7 or one of its dependent claims, and **in that** the plate (90) is at least partially surrounded by a marginal region of said secondary coating.

15. Coated part according to claim 14, produced by a method according to claim 9 or one of its dependent claims, **characterised in that** it comprises a groove (86) which is provided in the coated surface and receives the free edge (92) of the main coating (22) whilst concealing it.

16. Coated part according to any of the claims 14 to 15, produced by a method according to claim 13, **characterised in that** it comprises a foil (31) for thermal protection of the main blank (22) and of the secondary blank (30), which foil is fixed on the surface of the main blank (22) which is opposite the secondary blank (30).

17. Coated part according to any of the claims 14 to 16, **characterised in that** it forms an interior panel (2) of an automotive vehicle door.

18. Coated part according to claim 17, **characterised in that** it comprises a zone which forms an armrest (12), and **in that** the plate (90) made of plastic material foam is situated in the zone which forms the armrest (12).
